# EUROPEAN PATENT SPECIFICATION

(11) **EP 1 652 697 B1**
(45) Date of publication and mention of the grant of the patent: **19.12.2007**
(21) Application number: 05110190.5
(22) Date of filing: 15.02.2001
(51) Int. Cl.: B60D 1/64, H01R 13/00

(54) **Coupling device**
Anhängerkupplung
Attelage pour remorque

(30) Priority: 18.02.2000 SE 0000525
(43) Date of publication of application: 03.05.2006
(62) Divisional of application: 01904765.3
(73) Proprietor: VBG Produkter AB, 462 28 Vänersborg (SE)
(72) Inventor: Östh, Kjell Ove, 460 64 Frändefors (SE)
(74) Representative: Edlund, Fabian

(56) References cited:
- EP-A- 0 434 472
- DE-C- 849 658
- DE-C- 930 063

## Description

### Field of the Invention

The present invention relates to a trailer coupling for connecting a traction vehicle to a trailer, comprising a coupling part mounted at the back of the vehicle being adapted to receive a coupling end part fixed to the trailer, and a locking mechanism being adapted to fix the coupling end part to the coupling part so as to secure the mechanical connection of the vehicle to the trailer.

### Background Art

When connecting a vehicle to a trailer, electric wires for operating light and electronics of the trailer, and fluid lines, such as air lines, for pneumatic operation of the brakes of the trailer are usually connected.

Traditionally, this connection is carried out manually after the drawbar of the trailer has been mechanically secured to the vehicle. However, such handling is time-consuming and strenuous to the fitter and besides has a detrimental effect on the environment since during connection the vehicle is idling. Therefore efforts have been made to simplify the connection, and especially to coordinate the connection of electric power and air with the mechanical connection.

One example of such a solution is the coupling disclosed in SE 396,730, in which means for connecting air lines and electric wires are arranged on outer coupling panels on the coupling part and the coupling end part, respectively. A catching mouth at the coupling part ensures that the coupling end part is aligned in the lateral direction, and over the last distance the coupling end part is moved fully rectilinearly into the catching mouth. During this rectilinear motion, also the outer panels are rigidly interconnected, which establishes a connection of electric wires and air lines.

A further example is disclosed in DE 849,658, where means for connecting air lines is arranged at the end of a coupling end part provided with teeth. Like in SE 396,730, a final rectilinear motion is ensured, during which a connection of the air line is ensured. At the coupling part there is also arranged a system with gear wheels and link arms, which in cooperation with the teeth of the coupling end part ensures connection of an electric wire while at the same time the coupling end part is brought in place.

These systems suffer from the drawback that the connection of electric wire and air line takes place at the same time as the mechanical connection. This is inconvenient since the connection of electric wire and air line involves sensitive precision mechanics, whereas the mechanical connection of vehicle and trailer involves very great forces. Thus the fitting is very critical in order to prevent the connecting means for electric power and air from being subjected to excessive forces.

Since the connection of air takes place at the same time as the mechanical connection, there is also a risk that the trailer is provided with air *before* the mechanical connection has been 100 percent secured. This may result in the brakes of the trailer being released before the trailer has been secured, the trailer thus moving away from the vehicle. Even if the brakes, of course, are again locked as soon as the trailer moves away from the vehicle, people in the absolute vicinity of the trailer run the risk of being injured.

If a mechanical defect should arise in the electric connection, the trailer according to DE 849,658 would be provided with air but not with electric power since electric power and air are connected independently of each other.

The little spreading of the prior art solutions on the market is due to the problems involved.

### Objects of the Invention

A first object of the present invention is to provide a trailer coupling which enables connection of electric wires and fluid lines automatically in connection with the mechanical connection, without the problems described above.

A second object of the invention is to provide a coupling which is easy and quick to handle.

### Summary of the Invention

These objects are achieved by a trailer coupling of the type described by way of introduction, with a wedge-shaped coupling end part and a catching mouth which is arranged at the coupling part and fitted to the coupling end part. Moreover, the trailer coupling comprises separately operable means for connecting fluid lines as well as electric wires of the vehicle and the trailer respectively, said means being arranged to be operable, when the mechanical connection is secured by means of the locking mechanism, in order to secure connection of said electric wires and fluid lines through suitably positioned holes in respectively the receiving space and the main portion of the coupling end part.

According to the invention, the wedge-shaped coupling end part fits exactly in the coupling part. This wedge shape ensures alignment of the coupling end part with the coupling part in all directions at the same time. Thus it is not necessary first to align the coupling end part in the lateral direction and then to move it rectilinearly towards the coupling part, which is the case in connection with the prior art couplings that have been described above. By wedge-shaped is meant also other shapes having these properties, such as semi-oval, rhombic etc.

Only when the coupling end part has been secured in the coupling part by means of the locking mechanism, the connecting means for electric wire and fluid line are operated to secure the connection between trailer and vehicle.

Since the connection of electric power and pneumatics takes place after the fixing of the coupling end part, the connecting means are not subjected to the great forces that occur in connection with movements between vehicle and trailer before they have been mechanically secured.

According to a preferred embodiment of the invention, the connecting means comprise first connectors arranged at the coupling part, which are insertable through holes in the coupling end part in order to secure the connection of the fluid lines and the electric wires through cooperation with other connectors which are arranged in the coupling end part and positioned behind said holes.

The connection of the electric wires and fluid lines thus takes place through holes in the coupling end part, which in this case has an inner space in which said second connectors are arranged. The first connectors can be of a male type, such as pin-shaped electric contacts or projecting fluid nozzles. They can be arranged to be pushed in their longitudinal direction towards the coupling end part and penetrate holes in the same.

Owing to this construction, the connection takes place by a motion, preferably a rectilinear motion, which is easy to guide and control. It is also easy to ensure that the connectors are well protected since on the one hand they are arranged inside the coupling end part and, on the other hand, they are movable and thus can be inserted in some kind of protective means.

It goes without saying that the movable and fixed connectors can be reversed, and optionally the connectors in both coupling part and coupling end part can be movable.

Preferably the holes are slightly larger than the cross-sectional area of the connectors and can also be provided with cover means to reduce the risk of dirt and moisture penetrating through the holes.

According to an embodiment of the invention, a sensor is arranged in connection with the locking mechanism for detecting when the mechanical connection is secured, and thus enable time-controlled operation of the connectors. This makes it possible to carry out the connection of electric wires and fluid lines automatically and in immediate connection with the mechanical connection, thereby avoiding the need for two operations.

The coupling end part can be arranged to be in contact, when inserted into the coupling part, with the coupling part along elongate contact surfaces which only occupy a small part of the total circumferential surface of the coupling end part. In this way, contact with the coupling part is minimised, thus minimising the risk of dirt and other particles impeding the mechanical connection.

### Brief Description of the Drawings

The present invention will now be described in more detail with reference to the accompanying drawings, which by way of example illustrate preferred embodiments of the invention.
Fig. 1 is a schematic top plan view of a coupling according to an embodiment of the invention in a disconnected state.
Fig. 2 is a schematic side view of the coupling in Fig. 1.
Fig. 3 is a perspective view of a coupling end part and connectors according to an embodiment of the invention.
Fig. 4 is a schematic view of a detail of Fig. 1.

### Brief Description of a Preferred Embodiment

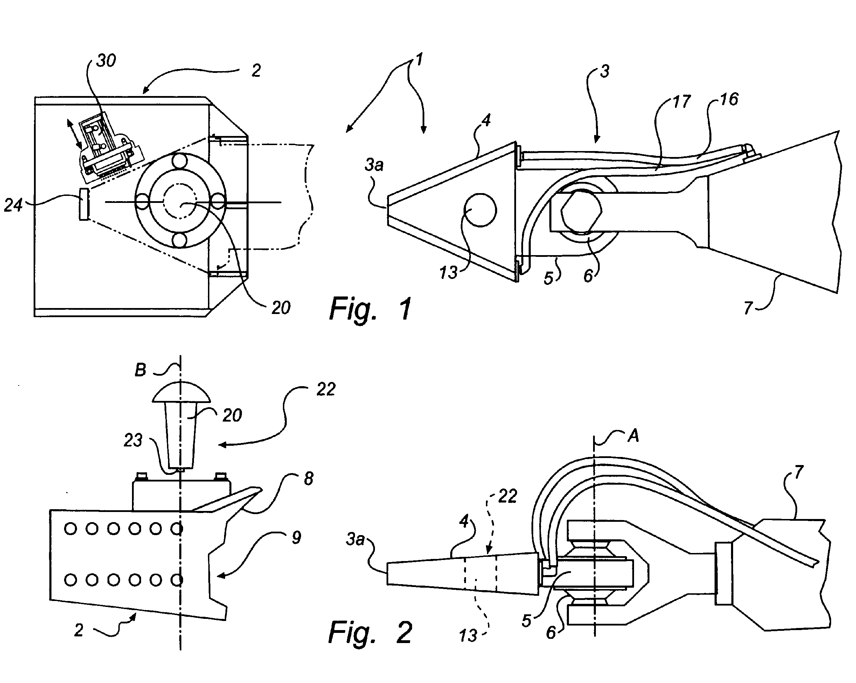

The trailer coupling 1 shown in Figs 1-2 comprises a coupling part 2 which is adapted to be bolted or welded to a rear drawbar of a traction vehicle (not shown), and a coupling end part 3 which has a main portion 4 and a rear portion 5 and which via a joint 6 is arranged in a drawbar 7 of a trailer (not shown). The rear portion 4 of the coupling end part is in the joint 6 turnable about an essentially vertical axis A, and by the entire drawbar 7 being pivotally arranged at the trailer, the coupling end part 3 is positionable in an arbitrary position. The joint 6 can be of a type known per se. The coupling part 3 has a catching mouth 8 with a receiving space 9 which is adapted to receive the coupling end part 3.

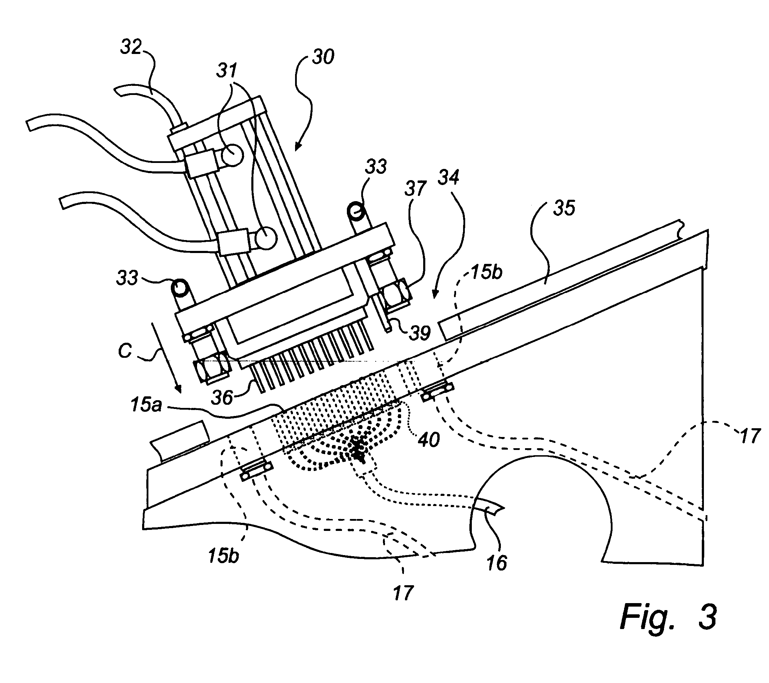

The main portion 4 of the coupling end part is illustrated in more detail in Fig. 3. The main portion 4 is wedge-shaped in a normal plane to the axis of rotation A of the joint 6, i.e. in a horizontal plane. By wedge-shape is in the first place meant an essentially triangular shape of the kind as shown in the figures, but it should be noted that the main portion could also be, for example, semi-oval or have a more complicated shape. The main portion according to Fig. 3 is besides slightly wedge-shaped also in a vertical plane, which is evident from the fact that its lateral surfaces 10 are slightly tapering towards the front end 3a.

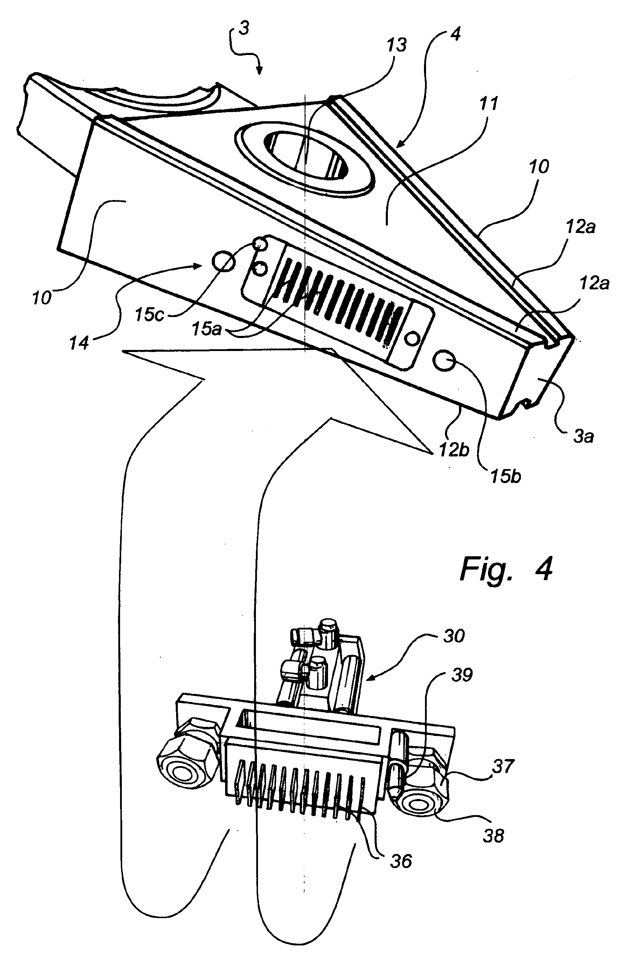

In the example shown in Fig. 3, the main portion 4 has two outer sectional elements 10 which are angled to each other and which in a first and a second plane are interconnected by two essentially triangular surfaces 11. The upper and lower edges 12a, 12b of the sectional elements extend somewhat above and below the surfaces 11. The main portion can be cast in one piece or consist of a plurality of parts welded together. The main portion is preferably at least partially hollow. The coupling end part 3 is further provided with a connector 14 in the form of a plurality of holes 15a-c in one of the sectional elements 10, to which electric wires and fluid lines 16, 17 are connected (see Fig. 4). In the shown example, all holes 15a-c of the connector 14 are formed on one side of the main portion 4 of the coupling end part, but of course the holes can be distributed on all sides of the main portion, including the upper and lower sides, provided that the corresponding connector in the coupling part is fitted accordingly.

Moreover the main portion 4 is formed with a through hole 13. The hole can, as in the shown example, be round in cross-section and preferably tapers somewhat downwards. Preferably, the hole 13 is positioned within the triangle that is defined by the sectional elements 10.

With reference once more to Figs 1-2, a lock plunger 20 is arranged at the coupling part to be movable along a vertical axis B. The lock plunger 20 is preferably spring loaded inwards to the receiving space 9 and, by means of e.g. hydraulically acting actuators (not shown), movable away from the receiving space 9. The shape of the lock plunger is fitted to the hole 13 in the coupling end part, for instance slightly tapering.

The lock plunger 20 constitutes, together with the hole 13, a locking mechanism 22 for securing the coupling end part 3 in the coupling part 2.

A sensor 23 is arranged in connection with the lock plunger 20 to detect the position of the lock plunger. The sensor can, for instance, be an electric switch which is connected when the lock plunger takes a predetermined position, an inductive transducer or an optical sensor.

A means 24 is arranged in the receiving space to detect whether the coupling end part 3 is fully inserted in the receiving space 9. This means can be a mechanical release arm or an optical or electronic transducer, for instance an inductive transducer which generates a signal when the material of the coupling end part 3 is brought into contact with the inductive transducer.

With reference to Fig. 4, a connector 30 is arranged at the coupling part 2 and is with the aid of an actuator 31 movable in a direction C towards a hole 34 in the wall 35 of the receiving space 9. The connector, together with the connector 14 in the coupling end part, is included in the connecting means of the coupling for electric wires and fluid lines, such as electric cables 32 and air tubes 33.

The connector 30 (which is shown in a perspective view in Fig. 3) comprises a plurality of contact pins 36 which are adapted to be inserted into corresponding holes 15a in the main portion 4 of the coupling end part and be brought into contact with electric contacts 40 arranged behind the holes 15a. The connector 30 also comprises contacts 37 to which the air tubes 33 are connected. The contacts 37 are provided with seals 38 so that, when they are pressed towards the hole 15b in the coupling end part 3, the contacts 37 are partly pressed into the holes while at the same time the seals 38 seal against the surrounding material. Behind the holes 15b, the air lines 17 of the trailer are connected, thereby obtaining an airtight connection between the air tubes 17 and 33.

The connector 30 can also be provided with a slightly conical guide pin 39 which is adapted to cooperate with a hole 15c in the coupling end part.

Especially the holes 15a in the coupling end part 3 can be covered with a protective means, in the form of a flexible plate (not shown) of e.g. rubber, in which cuts corresponding to the holes 15a have been formed. The plate prevents dirt and moisture from penetrating into the electric connections that are located underneath the plate while at the same time the rigid contact pins 36 can be made to pass through the plate with the aid of the actuator 31.

The function of the trailer coupling will be described below.

The coupling end part 3 is inserted into the receiving space 9 of the coupling part 2, whereby the upper and lower edges 12a, 12b of the sectional elements 10 are brought into contact with the inner walls of the receiving space. The sensor 24 detects when the front end 3a of the coupling end part 3 abuts against the sensor 24, and in prior art manner the lowering of the lock plunger 20 through the hole 13 in the coupling end part 3 is effected. Consequently the trailer is mechanically secured to the traction vehicle.

The sensor 23 detects that the lock plunger has taken its lowered position, and a signal is given to the actuator 31 which moves the connector 30 towards the coupling end part 3 inserted into the receiving space 9. The guide pin 39 of the connector 30 is moved into contact with the hole 15c, which ensures exact orientation of the connector 30 relative to the connector 14. Subsequently, the contact pins 36 are inserted through the holes 15a in the coupling end part and, on the other side of the holes, are brought into contact with corresponding electric contacts 40, thereby connecting the electric wires 16, 32. Moreover, the air contacts 37 of the connector 30 are brought into contact with the holes 15b and form an airtight connection between the air tubes 17 and 33.

In this manner, electric and, for instance, pneumatic connection of the trailer is achieved.

It will be appreciated that the embodiment described above can be modified and varied by a person skilled in the art without departing from the inventive idea defined in the claims. For example, the coupling end part can be designed in some other manner, as long as it is suitably positioned by being wedged into a space in the coupling part. Furthermore, the connectors for electric wires and fluid lines can be designed in other ways, as long as the operation thereof takes place separately from the mechanical connection of vehicle and trailer.

The coupling described above can with relatively simple means be adjusted to fit on a turntable of the kind that is used when connecting a trailer to a traction vehicle. The most important difference is that the locking mechanism is not arranged in the same manner. The shape and connecting function of the coupling, however, are essentially unchanged, with the same positive effects.

The term "turntable" is here used as a direct translation of a Swedish word indicating what is more commonly known by the skilled person as a "fifth wheel coupling".

## Claims

1. A trailer coupling for connecting a traction vehicle to a trailer, comprising:
a coupling end part (3) of a drawbar (7) fixed to the trailer,
a coupling part (2) mounted at the back of the vehicle being adapted to receive said coupling end part (3), and
a locking mechanism (20, 13) being adapted to fix the coupling end part (3) to the coupling part (2) so as to secure the mechanical connection of the vehicle to the trailer, **characterised in**
**that** the coupling end part (3) has an essentially wedge-shaped main portion (4), and
**that** the coupling part (2) has a receiving space (9) which is adapted to the shape of said main portion (4) and
**that** the coupling further comprises separately operable means (14, 30) for connecting fluid lines as well as electric wires (32, 33, 16, 17) of the vehicle and the trailer respectively,
said means (14, 30) being arranged to be operable to secure connection of said electric wires and fluid lines through suitably positioned holes (34, 15a-c) in respectively the receiving space (9) and the main portion (4) of the coupling end part only when the mechanical connection is secured by means of the locking mechanism (20, 13).

2. A coupling as claimed in claim 1, wherein the means (14, 30) for connecting fluid lines and electric wires comprise first connectors (36) arranged at the coupling part, which are insertable through holes (15a-c) in the coupling end part in order to secure the connection of the fluid lines and the electric wires through cooperation with other connectors (40) which are arranged in the coupling end part and positioned behind said holes.

3. A coupling as claimed in claim 2, wherein said holes (15a) are provided with cover means to reduce the risk of dirt and moisture penetrating through the holes.

4. A coupling as claimed in any one of the preceding claims, comprising a means (24) arranged in connection with the receiving space (9) of the coupling part, for detecting when the main portion (4) of the coupling end part has been inserted in the receiving space (9).

5. A coupling as claimed in any one of the preceding claims, comprising a sensor (23) arranged in connection with the locking mechanism (20, 13) to detect when the mechanical connection is secured, thereby enabling time-controlled operation of the connectors (14, 30).

6. A coupling as claimed in any one of the preceding claims, wherein the main portion (4) of the coupling end part is adapted to be in contact, when inserted into the receiving space (9), with the coupling part (2) along elongate contact surfaces (12a, 12b) which only occupy a small part of the total circumferential surface of the main portion (4).

7. A coupling as claimed in any one of the preceding claims, wherein the locking mechanism (20, 13) comprises a lock plunger (20) which is insertable into a hole (13) in the main portion (4) of the coupling end part.

8. A coupling according to claim 1, wherein said coupling part forms part of a turntable (fifth wheel).

9. A coupling according to claim 1, further comprising a connector (30) adapted to connect said electrical wires and fluid lines by a movement in a direction (C) transverse to a pulling direction of the coupling.

10. A vehicle equipped with a trailer coupling as claimed in any one of the preceding claims.

## Patentansprüche

1. Anhängerkupplung zum Verbinden eines Zugfahrzeugs mit einem Anhänger, die aufweist:
ein Kupplungsendteil (3) einer Zugdeichsel (7), die an dem Anhänger befestigt ist,
ein Kupplungsteil (2), das am Heck des Fahrzeugs angebracht ist, das so angepasst ist, dass es das Kupplungsendteil (3) aufnimmt, und
einen Verriegelungsmechanismus (20, 13), der so angepasst ist, dass er das Kupplungsendteil (3) am Kupplungsteil (2) befestigt, um die mechanische Verbindung des Fahrzeugs mit dem Anhänger zu sichern, **dadurch gekennzeichnet,**
**dass** das Kupplungsendteil (3) einen im Wesentlichen keilförmigen Hauptabschnitt (4) aufweist, und
**dass** das Kupplungsteil (2) einen Aufnahmeraum (9) aufweist, der an die Form des Hauptabschnitts (4) angepasst ist, und
**dass** die Kupplung weiterhin separat betreibbare Mittel (14, 30) zum Verbinden von Fluidleitungen und auch von Elektroleitungen (32, 33, 16, 17) des Fahrzeugs beziehungsweise des Anhängers aufweist,
wobei die Mittel (14, 30) so angeordnet sind, dass sie betreibbar sind, um die Verbindung der Elektroleitungen und Fluidleitungen durch in geeigneter Weise positionierte Löcher (34, 15a-c) in respektive dem Aufnahmeraum (9) und dem Hauptabschnitt (4) des Kupplungsendteils nur dann zu sichern, wenn die mechanische Verbindung mittels des Verriegelungsmechanismus (20, 13) gesichert ist.

2. Kupplung nach Anspruch 1, **dadurch gekennzeichnet, dass** die Mittel (14, 30) zum Verbinden von Fluidleitungen und Elektroleitungen erste, an dem Kupplungsteil angeordnete Verbinder (36) aufweisen, die durch Löcher (15a-c) in dem Kupplungsendteil einführbar sind, um die Verbindung der Fluidleitungen und der Elektroleitungen durch Zusammenwirken mit anderen Verbindern (40), die in dem Kupplungsendteil angeordnet und hinter den Löchern positioniert sind, zu sichern.

3. Kupplung nach Anspruch 2, **dadurch gekennzeichnet, dass** die Löcher (15a) mit Abdeckmitteln versehen sind, um die Gefahr zu verringern, dass Schmutz und Feuchtigkeit durch die Löcher eindringen.

4. Kupplung nach einem der vorhergehenden Ansprüche, die in Verbindung mit dem Aufnahmeraum (9) des Kupplungsteils angeordnete Mittel (24) zum Erfassen, wann der Hauptabschnitt (4) des Kupplungsendteils in den Aufnahmeraum (9) eingeführt wurde, aufweist.

5. Kupplung nach einem der vorhergehenden Ansprüche, die einen Sensor (23) aufweist, der in Verbindung mit dem Verriegelungsmechanismus (20, 13) angeordnet ist, um zu erfassen, wann die mechanische Verbindung gesichert ist, wodurch der zeitgesteuerte Betrieb der Verbinder (14, 30) ermöglicht wird.

6. Kupplung nach einem der vorhergehenden Ansprüche, **dadurch gekennzeichnet, dass** der Hauptabschnitt (4) des Kupplungsendteils so angepasst ist, dass er mit dem Kupplungsteil (2) entlang länglichen Kontaktoberflächen (12a, 12b), die nur einen kleinen Teil der Gesamtumfangsfläche des Hauptabschnitts (4) belegen, in Kontakt ist, wenn er in den Aufnahmeraum (9) eingeführt wird.

7. Kupplung nach einem der vorhergehenden Ansprüche, **dadurch gekennzeichnet, dass** der Verriegelungsmechanismus (20, 13) einen Verriegelungsstift (20) aufweist, der in ein Loch (13) in dem Hauptabschnitt (4) des Kupplungsendteils einführbar ist.

8. Kupplung nach Anspruch 1, **dadurch gekennzeichnet, dass** das Kupplungsteil Teil eines Drehtischs (Sattelkupplung) bildet.

9. Kupplung nach Anspruch 1, die weiterhin einen Verbinder (30) aufweist, der so angepasst ist, dass er die Elektroleitungen und Fluidleitungen durch eine Bewegung in eine Richtung (C), die quer zu einer Zugrichtung der Kupplung ist, verbindet.

10. Fahrzeug, das mit einer Anhängerkupplung nach einem der vorhergehenden Ansprüche ausgerüstet ist.

## Revendications

1. Attelage pour remorque serva.nt à atteler un véhicule à traction à une remorque, comprenant:
une partie d'extrémité d'attelage (3) d'un timon d'attelage (7) fixé à la remorque,
une partie d'attelage (2) montée à l'arrière du véhicule adaptée à recevoir ladite partie d'extrémité d'attelage (3), et
un mécanisme de verrouillage (20, 13) adapté à fixer la partie d'extrémité d'attelage (3) à la partie d'attelage (2) de sorte à sécuriser la liaison mécanique du véhicule à la remorque,
**caractérisé**
**en ce que** la partie d'extrémité d'attelage (3) comporte une partie principale en forme de coin (4),
**en ce que** la partie d'attelage (2) comporte un espace récepteur (9) qui est adapté à la forme de ladite partie principale (4) et
**en ce que** l'attelage comprend en outre des moyens actionnables séparément (14, 30) pour raccorder respectivement des conduites de fluides ainsi que des câbles électriques (32, 33, 16, 17) du véhicule et de la remorque,
lesdits moyens (14, 30) étant configurés pour être actionnables afin de sécuriser le raccordement desdits câbles électriques et conduites de fluides à travers des orifices placés de manière appropriée (34, 15a à 15c) respectivement dans l'espace récepteur (9) et dans la partie principale (4) de la partie d'extrémité d'attelage seulement lorsque la liaison mécanique est sécurisée au moyen du mécanisme de verrouillage (20, 13).

2. Attelage selon la revendication 1, dans lequel les moyens (14, 30) pour raccorder les conduites de fluides et les câbles électriques comprennent des premiers connecteurs (36) disposés au droit de la partie d'attelage, qui sont insérables par les orifices (15a à 15c) dans la partie d'extrémité d'attelage afin sécuriser le raccordement des conduites de fluides et des câbles électriques par le biais d'une coopération avec d'autres connecteurs (40) qui sont disposés dans la partie d'extrémité d'attelage et placés derrière lesdits orifices.

3. Attelage selon la revendication 2, dans lequel lesdits orifices (15a) sont équipés de moyens de bouchons pour réduire le risque que la saleté et l'humidité pénètrent par les orifices.

4. Attelage selon l'une quelconque des revendications précédentes, comprenant un moyen (24) disposé en liaison avec l'espace récepteur (9) de la partie d'attelage, pour détecter le moment où la partie principale (4) de la partie d'extrémité d'attelage a été insérée dans l'espace récepteur (9).

5. Attelage selon l'une quelconque des revendications précédentes, comprenant un capteur (23) disposé en liaison avec le mécanisme de verrouillage (20, 13) pour détecter le moment où la liaison mécanique est sécurisée, permettant ainsi un fonctionnement contrôlé temporellement des connecteurs (14, 30).

6. Attelage selon l'une quelconque des revendications précédentes, dans lequel la partie principale (4) de la partie d'extrémité d'attelage est adaptée à être en contact, lorsqu'elle est insérée dans l'espace récepteur (9), avec la partie d'attelage (2) le long de surfaces de contact allongées (12a, 12b) qui n'occupent qu'une petite partie de la surface circonférentielle totale de la partie principale (4).

7. Attelage selon l'une quelconque des revendications précédentes, dans lequel le mécanisme de verrouillage (20, 13) comprend un piston plongeur de verrouillage (20) qui est insérable dans un orifice (13) pratiqué dans la partie principale (4) de la partie d'extrémité d'attelage.

8. Attelage selon la revendication 1, dans lequel ladite partie d'attelage est une partie intégrante d'une plaque tournante (sellette d'attelage).

9. Attelage selon la revendication 1, comprenant en outre un connecteur (30) adapté à raccorder lesdits câbles électriques et conduites de fluides par un mouvement dans une direction (C) transversale par rapport à la direction de traction de l'attelage.

10. Véhicule équipé d'un attelage de remorque selon l'une quelconque des revendications précédentes.
